(19) Europäisches Patentamt
European Patent Office
Office européen des brevets

(11) **EP 4 443 870 A1**

(12) **EUROPEAN PATENT APPLICATION**
published in accordance with Art. 153(4) EPC

(43) Date of publication:
**09.10.2024 Bulletin 2024/41**

(21) Application number: **22900605.1**

(22) Date of filing: **01.12.2022**

(51) International Patent Classification (IPC):
***H04N 13/161*** (2018.01)

(52) Cooperative Patent Classification (CPC):
**H04N 13/161; H04N 19/119; H04N 19/13;
H04N 19/136; H04N 19/96**

(86) International application number:
**PCT/CN2022/135871**

(87) International publication number:
**WO 2023/098801 (08.06.2023 Gazette 2023/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **03.12.2021 CN 202111465446**

(71) Applicant: **Vivo Mobile Communication Co., Ltd.
Dongguan, Guangdong 523863 (CN)**

(72) Inventors:
• **ZHANG, Wei**
**Dongguan, Guangdong 523863 (CN)**
• **YANG, Fuzheng**
**Dongguan, Guangdong 523863 (CN)**
• **LU, Jingyun**
**Dongguan, Guangdong 523863 (CN)**
• **LV, Zhuoyi**
**Dongguan, Guangdong 523863 (CN)**

(74) Representative: **Lavoix
Bayerstraße 83
80335 München (DE)**

(54) **POINT CLOUD ATTRIBUTE ENCODING METHOD, POINT CLOUD DECODING METHOD, AND TERMINAL**

(57) This application discloses a point cloud attribute coding method, a point cloud decoding method, and a terminal, and belongs to the field of point cloud processing technologies. The point cloud attribute coding method according to an embodiment of this application includes: An encoder side obtains a to-be-coded point cloud, where the to-be-coded point cloud includes at least one type of attribute information, and each coding point in the to-be-coded point cloud includes an attribute value corresponding to the attribute information. The encoder side determines a target ordering manner of the to-be-coded point cloud based on an initial order corresponding to the to-be-coded point cloud or based on the initial order and density corresponding to the to-be-coded point cloud, where the initial order is determined based on an attribute value of a target coding point in the to-be-coded point cloud, and the density is determined based on geometric information of the to-be-coded point cloud and a quantity of coding points in the to-be-coded point cloud. The encoder side codes the to-be-coded point cloud according to the target ordering manner.

An encoder side obtains a to-be-coded point cloud — S101

The encoder side determines a target ordering manner of the to-be-coded point cloud based on an initial order corresponding to the to-be-coded point cloud or based on the initial order and density corresponding to the to-be-coded point cloud — S102

The encoder side codes the to-be-coded point cloud according to the target ordering manner — S103

FIG. 3

**Description**

**CROSS-REFERENCE TO RELATED APPLICATION**

This application claims priority to Chinese Patent Application No. 202111465446.8 filed in China on December 3, 2021, which is incorporated herein by reference in its entirety.

**TECHNICAL FIELD**

This application belongs to the field of point cloud processing technologies, and specifically, relates to a point cloud attribute coding method, a point cloud decoding method, and a terminal.

**BACKGROUND**

A point cloud is a set of randomly distributed discrete points in space. The points express a spatial structure and surface attributes of a three-dimensional object or scene.

In a process of predictive attribute coding of a point cloud, it is necessary to re-order the point cloud. According to related technologies, to reduce impact of transition points in space, Hilbert code is uniformly used to re-order the point cloud. However, the manner of re-ordering the point cloud, the Hilbert code is complex, and a spatial correlation between coding points in the point cloud are not considered, which reduce point cloud coding performance.

**SUMMARY**

Embodiments of this application provide a point cloud attribute coding method, a point cloud attribute decoding method, and a terminal, to solve a technical problem of reducing point cloud attribute coding performance caused by an ordering manner for re-ordering geometric information of the point cloud.

A first aspect provides a point cloud attribute coding method. The method includes:

An encoder side obtains a to-be-coded point cloud, where the to-be-coded point cloud includes at least one type of attribute information, and each coding point in the to-be-coded point cloud includes an attribute value corresponding to the attribute information;

the encoder side determines a target ordering manner of the to-be-coded point cloud based on an initial order corresponding to the to-be-coded point cloud or based on the initial order and density corresponding to the to-be-coded point cloud, where the initial order is determined based on an attribute value of a target coding point in the to-be-coded point cloud, and the density is determined based on geometric information of the to-be-coded point cloud and a quantity of coding points in the to-be-coded point cloud; and

the encoder side codes the to-be-coded point cloud according to the target ordering manner.

A second aspect provides a point cloud attribute coding apparatus, including:

a first obtaining module, configured to obtain a to-be-coded point cloud, where the to-be-coded point cloud includes at least one type of attribute information, and each coding point in the to-be-coded point cloud includes an attribute value corresponding to the attribute information;

a first determining module, configured to determine a target ordering manner of the to-be-coded point cloud based on an initial order corresponding to the to-be-coded point cloud or based on the initial order and density corresponding to the to-be-coded point cloud, where the initial order is determined based on an attribute value of a target coding point in the to-be-coded point cloud, and the density is determined based on geometric information of the to-be-coded point cloud and a quantity of coding points in the to-be-coded point cloud; and

a coding module, configured to code the to-be-coded point cloud according to the target ordering manner.

A third aspect provides a point cloud attribute decoding method. The method includes:

A decoder side obtains a to-be-decoded point cloud and at least one target parameter in an attribute parameter set of the to-be-decoded point cloud, where one target parameter represents a target ordering manner corresponding to a type of attribute information; and

the decoder side decodes the to-be-decoded point cloud according to a target ordering manner represented by the target parameter.

A fourth aspect provides a point cloud attribute decoding apparatus, including:

a second obtaining module, configured to obtain a to-be-decoded point cloud and at least one target parameter in an attribute parameter set of the to-be-decoded point cloud, where one target parameter represents a target ordering manner corresponding to a type of attribute information; and
a decoding module, configured to decode the to-be-decoded point cloud according to a target ordering manner represented by the target parameter.

A fifth aspect provides a terminal. The terminal includes a processor and a memory. The memory stores a program or an instruction that can be run on the processor, and when the program or the instruction is executed by the processor, the steps of the method according to the first aspect are implemented or the steps of the method according to the third aspect are implemented.

A sixth aspect provides a readable storage medium. The readable storage medium stores a program or an instruction. When the program or the instruction is executed by a processor, steps of the method in the first aspect are implemented, or steps of the method in the third aspect are implemented.

A seventh aspect provides a chip. The chip includes a processor and a communication interface. The communication interface is coupled to the processor. The processor is configured to run a program or an instruction to implement the method in the first aspect or implement the method in the third aspect.

An eighth aspect provides a computer program product, where the computer program product is stored in a storage medium, and the computer program product is executed by at least one processor to implement the steps of the point cloud attribute coding method in the first aspect or the steps of the point cloud attribute decoding method in the third aspect.

A ninth aspect provides an electronic device, configured to implement the steps of the method in the first aspect or the steps of the method in the third aspect.

In embodiments of this application, the to-be-coded point cloud is obtained. A target ordering manner of the to-be-coded point cloud is determined based on an initial order corresponding to the to-be-coded point cloud or based on the initial order and density corresponding to the to-be-coded point cloud. The to-be-coded point cloud is coded according to the target ordering manner. In embodiments of this application, the initial order corresponding to the to-be-coded point cloud and the density of the to-be-coded point cloud both can reflect spatial correlations of coding points in the point cloud. The target ordering manner for re-ordering the point cloud is determined based on the initial order of the to-be-coded point cloud or the initial order and density of the to-be-coded point cloud. In this way, in a process of re-ordering the point cloud, due consideration is given to the spatial correlations of the coding points in the point cloud. This improves point cloud coding efficiency.

## BRIEF DESCRIPTION OF THE DRAWINGS

FIG. 1 is a schematic diagram of a framework of a point cloud AVS attribute coding apparatus;
FIG. 2 is a schematic diagram of a framework of a point cloud AVS attribute decoding apparatus;
FIG. 3 is a flowchart of a point cloud attribute coding method according to an embodiment of this application;
FIG. 4 is a flowchart of a point cloud attribute decoding method according to an embodiment of this application;
FIG. 5 is a diagram of a structure of a point cloud attribute coding apparatus according to an embodiment of this application;
FIG. 6 is a diagram of a structure of a point cloud attribute decoding apparatus according to an embodiment of this application;
FIG. 7 is a diagram of a structure of a communication device according to an embodiment of this application; and
FIG. 8 is a schematic diagram of a hardware structure of a terminal according to an embodiment of this application.

## DETAILED DESCRIPTION

Technical solutions in embodiments of this application are clearly described in the following with reference to accompanying drawings in embodiments of this application. It is clear that the described embodiments are merely some rather than all of embodiments of this application. All other embodiments obtained by a person skilled in the art based on embodiments of this application fall within the protection scope of this application.

In the specification and claims of this application, terms such as "first" and "second" are used to distinguish similar objects, but are not used to describe a specific sequence or order. It should be understood that terms used in this way are exchangeable in a proper case, so that embodiments of this application can be implemented in an order different from the order shown or described herein. In addition, objects distinguished by using "first" and "second" are usually of the same type, and the terms do not limit a quantity of the objects. For example, a first object can be one object or more objects. In addition, "and/or" used in this specification and the claims represents at least one of connected objects. The character "/" usually indicates an "or" relationship between associated objects.

An attribute coding apparatus corresponding to a point cloud attribute coding method and an attribute decoding apparatus corresponding to a point cloud attribute decoding method in embodiments of this application may both be terminals. The terminal may be also referred to as a terminal device or user equipment (User Equipment, UE). The terminal may be a terminal-side device like a mobile phone, a tablet personal computer (Tablet Personal Computer), a laptop computer (Laptop Computer), which is also referred to as a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home (a home device with a wireless communication function, for example, a refrigerator, a television, a washing machine, or furniture), a games console, a personal computer (personal computer, PC), a teller machine, and a self-service machine. The wearable device includes a smart watch, a smart band, a smart headphone, smart glasses, a smart jewelry (a smart bangle, a smart bracelet, a smart ring, a smart necklace, a smart anklet, a smart ankle bracelet, and the like), a smart wristband, a smart cloth, and the like. It should be noted that the specific type of the terminal is not limited in embodiments of this application.

For ease of understanding, content of embodiments of this application is described in the following.

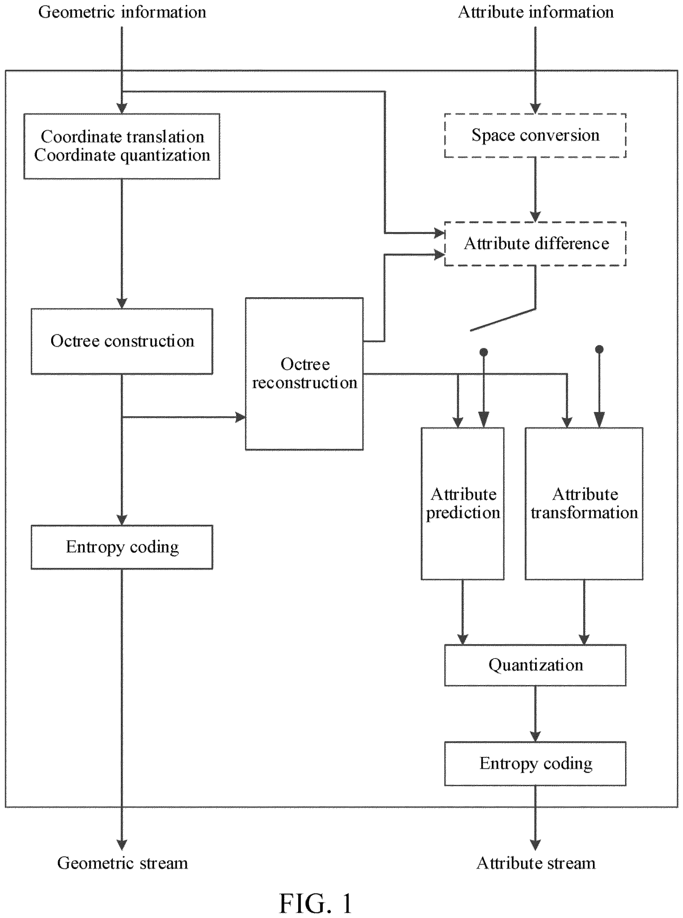

Refer to FIG. 1. As shown in FIG. 1, currently, according to the audio video coding standard, geometric information and attribute information of a point cloud are separately coded by using a point cloud AVS attribute coding apparatus. First, coordinate transformation is performed on the geometric information, so that the entire point cloud can be contained in a bounding box (bounding box). Then coordinate quantization is performed. Quantization is mainly performed for scaling. Geometric coordinates are rounded in quantization. In this case, some points have the same geometric information, which are referred to as duplicate points. Whether duplicate points are removed is determined based on parameters. The two steps of quantization and duplicate point removal are also referred to as voxelization. Then the bounding box is divided to obtain a multiway tree like an octree, a quadtree, or a binary tree. In a geometric information coding framework that is based on the multiway tree, the bounding box is divided into eight subcubes. A non-empty subcube is further divided until a unit cube with leaf nodes of $1 \times 1 \times 1$ is obtained. A quantity of the leaf nodes is coded to generate a binary stream.

In geometric coding of a point cloud based on the multiway tree, a to-be-coded point needs to store placeholder information of a neighbor node for predictive coding on placeholder information of the to-be-coded point. Therefore, for a to-be-coded point close to a leaf node, a large amount of placeholder information needs to be stored, which occupies a lot of memory space.

After geometric coding is completed, the geometric information is reconstructed for subsequent re-coloring. Attribute coding mainly targets at color and reflectance information. First, whether to perform color space conversion is determined based on a parameter. If color space conversion is performed, the color information is converted from Red Green Blue (Red Green Blue, RGB) color space to luminance and chrominance (YUV) color space. Then, an original point cloud is used to recolor a point cloud obtained through geometric reconstruction, so that uncoded attribute information corresponds to reconstructed geometric information. In color information coding, after the point cloud is ordered by using Morton code or Hilbert code, geometric spatial relationships are used to search for a nearest neighbor of a to-be-predicted point. A reconstruction attribute value of a found neighbor is used to predict the to-be-predicted point and obtain a prediction attribute value. Then, a true attribute value and the prediction attribute value are differentiated to obtain a prediction residual. Finally, the prediction residual is quantized and coded to generate a binary stream.

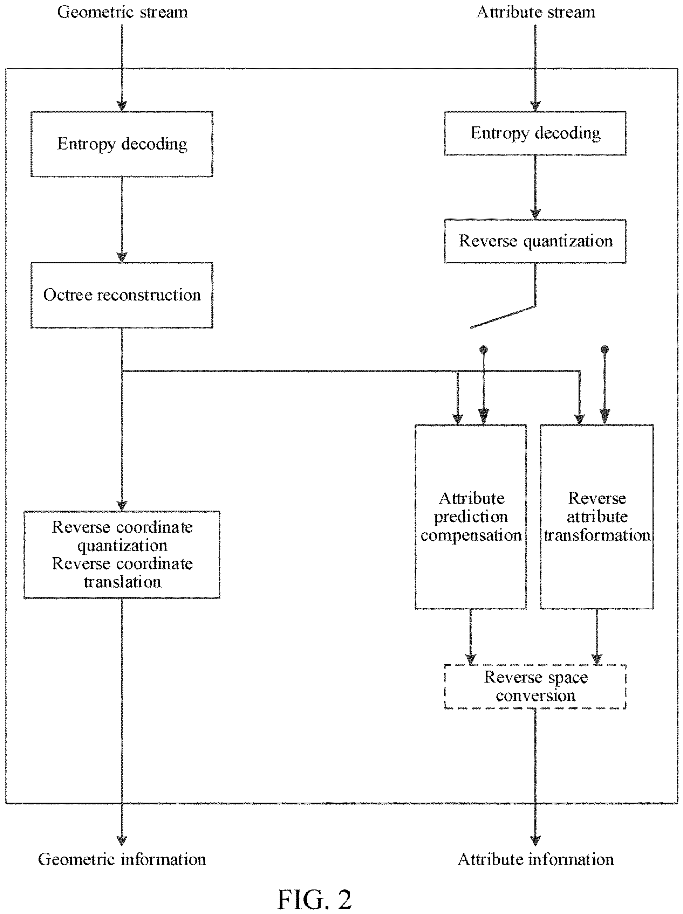

It should be understood that a decoding process in the audio video coding standard corresponds to the foregoing coding process. Specifically, a framework of an audio video coding standard (Audio Video coding Standard, AVS) attribute decoding apparatus is shown in FIG. 2.

Currently, the audio video coding standard have the following technical issues.

In the audio video coding standard, after geometric coding is performed on a point cloud, attribute coding is performed on the point cloud. In a process of predictive attribute coding of a point cloud, Hilbert code is used to re-order the point cloud. However, a manner of re-ordering the point cloud by using the Hilbert code is complex, and a spatial correlation between coding points in the point cloud are not considered, which reduce point cloud coding performance.

Based on the foregoing situation, how to improve the performance of coding a point cloud in predictive attribute coding is a technical problem that needs to be solved.

To resolve the foregoing possible technical problem, an embodiment of this application provides a point cloud attribute coding method. The point cloud attribute coding method provided in the embodiment of this application is described in detail by using some embodiments and application scenarios thereof with reference to accompanying drawings.

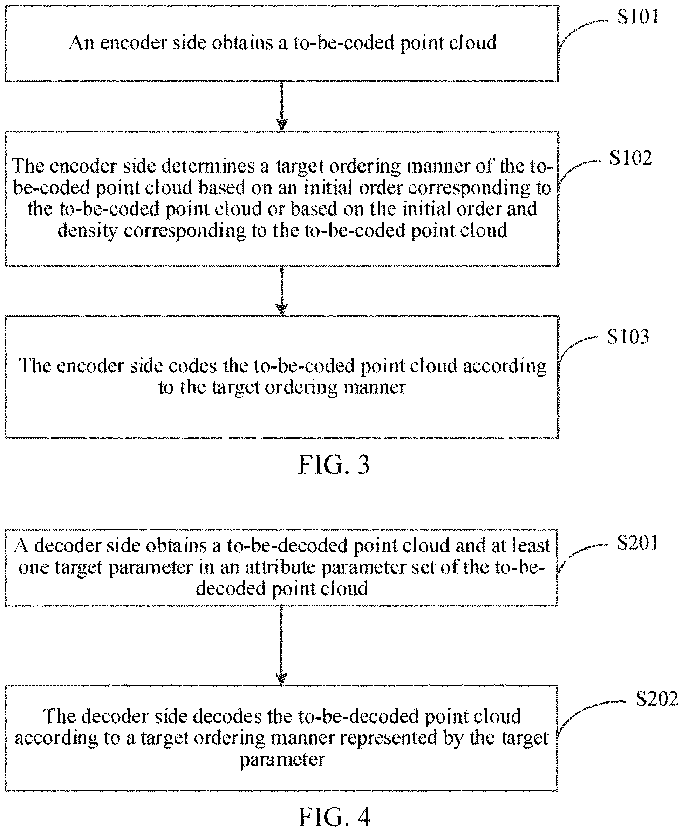

Refer to FIG. 3. FIG. 3 is a flowchart of a point cloud attribute coding method provided in this application. The point cloud attribute coding method provided in this embodiment includes the following steps.

S101: An encoder side obtains a to-be-coded point cloud.

The to-be-coded point cloud in this step is a point cloud based on geometric coding. The to-be-coded point cloud in this step is a point cloud that is not re-ordered, and the to-be-coded point cloud in this step is a point cloud on which re-coloring and color space conversion are performed.

Re-coloring refers to using an original point cloud for re-coloring a point cloud obtained through geometric reconstruction, so that uncoded attribute information corresponds to reconstructed geometric information, and then a re-colored point cloud can be obtained. Color space conversion refers to converting the color information of the point cloud from RGB space to YUV space.

The to-be-coded point cloud in this step includes at least one type of attribute information. It should be understood that one type of attribute information corresponds to one attribute type, and each coding point in the to-be-coded point cloud includes an attribute value corresponding to the attribute information.

For example, the to-be-coded point cloud includes two pieces of attribute information. One represents reflectance. The other represents a color. Each coding point in the to-be-coded point cloud includes an attribute value that represents reflectance and an attribute value that represents a color.

S102: The encoder side determines a target ordering manner of the to-be-coded point cloud based on an initial order corresponding to the to-be-coded point cloud or based on the initial order and density corresponding to the to-be-coded point cloud.

The initial order corresponding to the to-be-coded point cloud refers to an input order of the to-be-coded point cloud during attribute coding. The initial order is determined based on an attribute value of a target coding point in the to-be-coded point cloud. In this step, an optional implementation is determining the target ordering manner of the to-be-coded point cloud based on the initial order corresponding to the to-be-coded point cloud. Another optional implementation is determining the target ordering manner of the to-be-coded point cloud based on the initial order and density corresponding to the to-be-coded point cloud. The foregoing target ordering manner includes but is not limited to the initial order, Hilbert code ordering, and Morton code ordering.

For specific technical solutions for determining the target ordering manner of the to-be-coded point cloud, refer to subsequent embodiments.

S103: The encoder side codes the to-be-coded point cloud according to the target ordering manner.

In this step, after determining the target ordering manner, the target ordering manner is used to re-order the to-be-coded point cloud, and then the re-ordered to-be-coded point cloud is coded to generate a binary stream.

In this step, a corresponding target parameter may be introduced into an attribute parameter set of the to-be-coded point cloud, and a value of the target parameter is determined based on the initial order and density of the to-be-coded point cloud. The target ordering manner for re-ordering the to-be-coded point cloud is determined based on the value of the target parameter. The foregoing target parameter is also referred to as a re-ordering mode identifier.

The foregoing target parameter can be expressed as sort_mode[num_attr_type], where num_attr_type represents a quantity of attribute types of the point cloud. For example, the foregoing target parameter can be represented as sort_mode[attrIdx], where attrIdx identifies different attribute types. Specifically, refer to Table 1.

Table 1

| attrIdx | Attribute type |
|---------|----------------|
| 0 | Color |
| 1 | Reflectance |

As shown in Table 1, when the value of attrIdx is 0, the attribute type is the color. When the value of attrIdx is 1, the attribute type is the reflectance. In this case, sort_mode[0] represents a re-ordering manner of color attribute information in the to-be-coded point cloud, and sort_mode[1] represents a re-ordering manner of reflectance attribute information in the to-be-coded point cloud.

It should be understood that in a process of performing entropy coding on the to-be-coded point cloud, a specific value of the target parameter may be written into the attribute parameter set, so that the point cloud can be re-ordered based on the target parameter during decoding.

Under a condition of lossy coding, performance of coding the point cloud according to point cloud attribute coding provided in embodiments of this application is higher than that of conventional point cloud attribute coding. For ease of understanding technical effects generated by this application, refer to Table 2.

Table 2

| Test sequence | BD-AttrReate |
|---|---|
| Test sequence 1 | -0.8% |
| Test sequence 2 | -0.3% |
| Test sequence 3 | -1.2% |
| Test sequence 4 | -1.3% |

The test sequence in Table 2 are obtained by comparing a point cloud coded according to point cloud attribute coding provided in embodiments of this application with a point cloud coded according to conventional point cloud attribute coding. The BD-AttrReate in Table 2 is a parameter that measures attribute information coding performance. When BD-AttrReate is negative, it indicates high coding performance. In other words, a higher absolute value of a corresponding value of BD-AttrReate indicates greater benefits brought by coding performance. It can be learned from Table 2 that performance of coding a point cloud according to point cloud attribute coding provided in embodiments of this application is higher than that of the conventional point cloud attribute coding.

In embodiments of this application, the to-be-coded point cloud is obtained. The target ordering manner of the to-be-coded point cloud is determined based on the initial order corresponding to the to-be-coded point cloud or based on the initial order and density corresponding to the to-be-coded point cloud. The to-be-coded point cloud is coded according to the target ordering manner. In embodiments of this application, the initial order corresponding to the to-be-coded point cloud and the density of the to-be-coded point cloud both can reflect spatial correlations of coding points in the point cloud. The target ordering manner for re-ordering the point cloud is determined based on the initial order of the to-be-coded point cloud or the initial order and density of the to-be-coded point cloud. In this way, in a process of re-ordering the point cloud, due consideration is given to the spatial correlations of the coding points in the point cloud. This improves point cloud coding efficiency.

Optionally, the determining a target ordering manner of the to-be-coded point cloud based on an initial order corresponding to the to-be-coded point cloud or based on the initial order and density corresponding to the to-be-coded point cloud includes:

The encoder side determines the target ordering manner as the initial order in a case that the initial order corresponding to the to-be-coded point cloud is a first order;

the encoder side determines the target ordering manner as Hilbert code ordering in a case that the initial order corresponding to the to-be-coded point cloud is a second order and the to-be-coded point cloud is a dense point cloud; or

the encoder side determines the target ordering manner as Morton code ordering in a case that the initial order corresponding to the to-be-coded point cloud is a second order and the to-be-coded point cloud is a sparse point cloud.

The foregoing first order represents a first correlation of spatial coding points of the to-be-coded point cloud. The first correlation can be understood as a strong correlation between the coding points in the to-be-coded point cloud. The foregoing first order can be understood as an organized input order of the to-be-coded point cloud. The foregoing second order represents a second correlation of the spatial coding points of the to-be-coded point cloud. The second correlation can be understood as a weak correlation between the coding points in the to-be-coded point cloud. The foregoing second order can be understood as an unorganized input order of the to-be-coded point cloud.

In this embodiment, the target ordering manner is determined as the initial order in the case that the initial order corresponding to the to-be-coded point cloud is the first order, which indicates that there is a spatial correlation between the coding points in the to-be-coded point cloud.

The target ordering manner is determined as Hilbert code ordering in the case that the initial order corresponding to the to-be-coded point cloud is the second order and the to-be-coded point cloud is the dense point cloud, which indicates that there may be a plurality of transition points in the to-be-coded point cloud.

The target ordering manner may be determined as the Morton code ordering with less complexity in the case that the initial order corresponding to the to-be-coded point cloud is the third order and the to-be-coded point cloud is the sparse point cloud, which indicates that there may be no transition points in the to-be-coded point cloud.

For ease of understanding, refer to Table 3.

Table 3

| sortModeIdx | Target ordering manner |
|---|---|
| 0 | Input order |

(continued)

| sortModeIdx | Target ordering manner |
|---|---|
| 1 | Hilbert code ordering |
| 2 | Morton code ordering |

In Table 3, sortModeIdx represents the value of the target parameter. As shown in Table 3, in the case that sortModeIdx is 0, the target ordering manner is determined as the initial order. In the case that sortModeIdx is 1, the target ordering manner is determined as Hilbert code ordering. In the case that sortModeIdx is 2, the target ordering manner is determined as Morton code ordering.

In this embodiment, the spatial correlations of the coding points in the to-be-coded point cloud is considered to determine the target ordering manner. This improves point cloud coding efficiency.

A technical solution for determining the initial order of the to-be-coded point cloud is described below in detail.

Optionally, the method further includes:

The encoder side divides the to-be-coded point cloud, to obtain N point cloud groups;
the encoder side determines a target attribute value corresponding to each point cloud group based on an attribute value corresponding to a target coding point in the point cloud group;
the encoder side determines a target value based on N and the target attribute value corresponding to each point cloud group; and
the encoder side determines the initial order based on the target value.

In this embodiment, after obtaining the to-be-coded point cloud, the to-be-coded point cloud is divided to obtain the N point cloud groups, where N is a positive integer greater than or equal to 1. A quantity of coding points included in each point cloud group can be customized.

An optional case is that each point cloud group includes a same quantity of coding points. For example, the to-be-coded point cloud includes 100 coding points. In this case, the foregoing 100 coding points can be divided into 10 point cloud groups, and each point cloud group includes 10 coding points.

Another optional case is that there may be a point cloud group whose quantity of coding points is different from that of another point cloud group. For example, the to-be-coded point cloud includes 90 coding points. The foregoing 100 coding points can be divided into five point cloud groups. A first point cloud group, a second point cloud group, a third point cloud group, and a fourth point cloud group all include 20 coding points. A fifth point cloud group includes 10 coding points.

For each point cloud group, the target attribute value corresponding to the point cloud group can be determined based on the attribute value corresponding to the target coding point in the point cloud group. For specific technical solutions for determining the target attribute value corresponding to the point cloud group, refer to subsequent embodiments.

In this embodiment, whether a point cloud group is a target point cloud group may be determined based on a target attribute value corresponding to the point cloud group, where there is a spatial correlation between the coding points in the target point cloud group. Optionally, the target value may be determined based on N and the target attribute value corresponding to each point cloud group, where the target value represents a ratio of the target point cloud group to all point cloud groups; and the initial order of the to-be-coded point cloud is determined based on the specific target value.

Optionally, the initial order meets at least one of the following:

In a case that the target value is greater than a first preset threshold, the initial order corresponding to the to-be-coded point cloud is the first order; or
in a case that the target value is less than or equal to the first preset threshold, the initial order corresponding to the to-be-coded point cloud is the second order.

The first preset threshold may be an empirical threshold or a user-defined threshold. In this embodiment, in the case that the target value is greater than the first preset threshold, there is a strong spatial correlation between most of the coding points in the to-be-coded point cloud, and the initial order corresponding to the to-be-coded point cloud is determined as the organized first order.

In the case that the target value is less than or equal to the first preset threshold, there is a weak spatial correlation between most of the coding points in the to-be-coded point cloud, and the initial order corresponding to the to-be-coded point cloud is determined as the unorganized second order.

Determining a target attribute value corresponding to a point cloud group is described below in detail.

Optionally, the determining a target attribute value corresponding to each point cloud group based on an attribute value corresponding to a target coding point in the point cloud group includes:

The encoder side determines an attribute value corresponding to a first coding point in the point cloud group as the target attribute value corresponding to the point cloud group; or
the encoder side determines an average of attribute values corresponding to all coding points in the point cloud group as the target attribute value corresponding to the point cloud group.

An optional implementation is determining the first coding point in the point cloud group as the target coding point. In this implementation, the attribute value corresponding to the first coding point in the point cloud group is determined as the target attribute value corresponding to the point cloud group.

Another optional implementation is determining all the coding points in the point cloud group as target coding points. In this implementation, the average of the attribute values corresponding to all the coding points in the point cloud group is determined as the target attribute value corresponding to the point cloud group.

It should be understood that if an attribute type corresponding to the target attribute value is a color attribute, the foregoing attribute value can be obtained based on any of a channel Y, a channel U, or a channel V corresponding to the coding point; or if the attribute type corresponding to the target attribute value is reflectance, the reflectance of the coding point can be directly obtained and used as the attribute value.

Optionally, the determining a target value based on N and the target attribute value corresponding to each point cloud group includes:

For each first point cloud group, the encoder side calculates a difference between a target attribute value corresponding to the first point cloud group and a target attribute value corresponding to a second point cloud group;
the encoder side determines the point cloud group as the target point cloud group in a case what the difference is less than a second preset threshold; and
the encoder side determines the target value based on a first value.

The first point cloud group is any point cloud group other than a head point cloud group in to-be-coded point cloud groups. The second point cloud group is associated with the first point cloud group. Optionally, the second point cloud group is a point cloud group that is adjacent to the first point cloud group and located before the first point cloud group in the to-be-coded point cloud.

The second preset threshold may be an empirical threshold or a user-defined threshold.

In this embodiment, the difference between the target attribute value corresponding to the first point cloud group and the target attribute value corresponding to the second point cloud group is calculated. If the difference is less than the second preset threshold, it indicates that there is a spatial correlation between coding points in the first point cloud group and coding points in the second point cloud group. In this case, the first point cloud group is determined as the target point cloud group.

Optionally, a quantity of target point cloud groups in the to-be-coded point cloud is determined as the first value, and the target value is determined based on the first value. For specific technical solutions, refer to subsequent embodiments.

Optionally, the determining the target value based on the first value includes:
determining a quotient of the first value and second value as the target value.

In this embodiment, the difference between N and the preset value may be determined as the second value, where the preset value represents a quantity of head point cloud groups in the to-be-coded point cloud, that is, the preset value may be 1. The target value is obtained through division between the first value and the second value. It should be understood that in another embodiment, division may be performed on the first value and the second value that are weighted to obtain the target value.

For ease of understanding, refer to the following formula:

$$\text{ratioOfSubGroup} = \frac{\text{SubGroupNum}}{\text{GroupNum} - 1}$$

In the formula, ratioOfSubGroup is the target value, SubGroupNum is the quantity of target point cloud groups, and GroupNum is a total of point cloud groups in the to-be-coded point cloud.

Optionally, the method further includes:

The encoder side determines a third value based on the geometric information of the to-be-coded point cloud;

the encoder side determines a density value corresponding to the to-be-coded point cloud based on the third value and the quantity of coding points; and

the encoder side determines the density corresponding to the to-be-coded point cloud based on the density value.

The third value represents a size of the to-be-coded point cloud. As described above, the geometric information includes the length information, the width information, and the height information of the bounding box containing the to-be-coded point cloud. Specifically, the third value can be obtained according to the following formula:

$$\text{sizeOfPointCloud} = \text{bounding\_box\_x} \times \text{bounding\_box\_y} \times \text{bounding\_box\_z}$$

In the formula, sizeOfPointCloud is the third value, bounding_box_x is a length value of the bounding box containing the to-be-coded point cloud, bounding_box_y is a width value of the bounding box containing the to-be-coded point cloud, and bounding_box_z is a height value of the bounding box containing the to-be-coded point cloud.

After determining the third value, division is performed on the third value and the quantity of coding points in the to-be-coded point cloud, to obtain the density value corresponding to the to-be-coded point cloud. Specifically, the density value can be obtained according to the following formula:

$$\text{densityOfPoint} = \frac{\text{sizeOfPointCloud}}{\text{pointnum}}$$

In the formula, densityOfPoint is the density value, sizeOfPointCloud is the third value, and pointnum is the quantity of coding points in the to-be-coded point cloud.

In this embodiment, a third preset threshold is further set, which can be an empirical threshold or a customized threshold. The to-be-coded point cloud is determined as a dense point cloud in a case that the density value is less than the third preset threshold. The to-be-coded point cloud is determined as a sparse point cloud in a case that the density value is greater than or equal to the third preset threshold.

The point cloud attribute decoding method provided in the embodiment of this application is described in detail by using some embodiments and application scenarios thereof with reference to an accompanying drawing.

Refer to FIG. 4. FIG. 4 is a flowchart of a point cloud attribute decoding method provided in this application. The point cloud attribute decoding method provided in this embodiment includes the following steps.

S201: A decoder side obtains a to-be-decoded point cloud and at least one target parameter in an attribute parameter set of the to-be-decoded point cloud.

As described above, in a process of performing entropy coding on the point cloud, a value corresponding to the target parameter is written into a binary stream. In this way, during a decoding process of the point cloud, the decoder side can obtain the target parameter in the attribute parameter set of the to-be-decoded point cloud, where a quantity of target parameters is greater than or equal to 1, and one target parameter represents a target ordering manner corresponding to a type of attribute information.

For example, in a case that the to-be-decoded point cloud includes two attribute types, namely, color and reflectance, the quantity of target parameters is 2.

S202: The decoder side decodes the to-be-decoded point cloud according to a target ordering manner represented by the target parameter.

In this step, a re-ordering manner of the to-be-decoded point cloud may be determined based on a value of the target parameter, and then the to-be-decoded point cloud can be decoded.

Refer to Table 3. In a case that the value corresponding to the target parameter is 0, an initial order is used, that is, an input order of the to-be-decoded point cloud is used, to decode the to-be-decoded point cloud. In a case that the value corresponding to the target parameter is 1, Hilbert code ordering is used to decode the to-be-decoded point cloud. In a case that the value corresponding to the target parameter is 2, Morton code ordering is used to decode the to-be-decoded point cloud.

In this embodiment of this application, the to-be-decoded point cloud and the at least one target parameter in the attribute parameter set of the to-be-decoded point cloud are obtained; and the to-be-decoded point cloud is decoded according to the target ordering manner represented by the target parameter. In this embodiment of this application, the ordering manner for re-ordering the to-be-decoded point cloud is determined based on the target parameter in the attribute parameter set of the to-be-decoded point cloud. The ordering manner represented by the target parameter is determined based on the initial order of the point cloud or based on the initial order and density. The initial order and density of the point cloud both can reflect spatial correlations of to-be-decoded points in the point cloud. This improves decoding performance.

Optionally, in a case that the target parameter is a first value, the target ordering manner is the initial order; or

in a case that the target parameter is a second value, the target ordering manner is Hilbert code ordering; or

in a case that the target parameter is a third value, the target ordering manner is Morton code ordering.

In this embodiment, different values can be assigned to the target parameter, so that the target ordering manner can be determined.

Refer to Table 3. In the case that the target parameter is the first value, the target ordering manner is determined as the initial order, where the first value may be 0.

In the case that the target parameter is the second value, the target ordering manner is determined as the Hilbert code ordering, where the second value may be 1.

In the case that the target parameter is the third value, the target ordering manner is determined as the Morton code ordering, where the third value may be 2.

The point cloud attribute coding method provided in the embodiment of this application may be performed by a point cloud attribute coding apparatus. In this embodiment of this application, an example in which the point cloud attribute coding apparatus executes the point cloud attribute coding method is used to describe the point cloud attribute coding apparatus provided in this embodiment of this application.

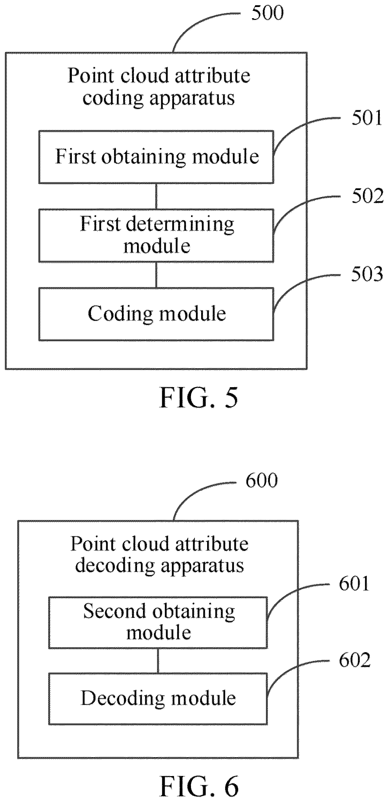

As shown in FIG. 5, a point cloud attribute coding apparatus 500 includes:

a first obtaining module 501, configured to obtain a to-be-coded point cloud;

a first determining module 502, configured to determine a target ordering manner of the to-be-coded point cloud based on an initial order corresponding to the to-be-coded point cloud or based on the initial order and density corresponding to the to-be-coded point cloud; and

a coding module 503, configured to code the to-be-coded point cloud according to the target ordering manner.

Optionally, the first determining module 502 is specifically configured to:

determine the target ordering manner as the initial order in a case that the initial order corresponding to the to-be-coded point cloud is a first order;

determine the target ordering manner as Hilbert code ordering in a case that the initial order corresponding to the to-be-coded point cloud is a second order and the to-be-coded point cloud is a dense point cloud; or

determine the target ordering manner as Morton code ordering in a case that the initial order corresponding to the to-be-coded point cloud is a second order and the to-be-coded point cloud is a sparse point cloud.

Optionally, the point cloud attribute coding apparatus 500 further includes:

a dividing module, configured to divide the to-be-coded point cloud, to obtain N point cloud groups;

a second determining module, configured to determine a target attribute value corresponding to each point cloud group based on an attribute value corresponding to a target coding point in the point cloud group;

a third determining module, configured to determine a target value based on N and the target attribute value corresponding to each point cloud group; and

a fourth determining module, configured to determine the initial order based on the target value.

Optionally, the second determining module is specifically configured to:

determine an attribute value corresponding to a first coding point in the point cloud group as the target attribute value corresponding to the point cloud group; or

determine an average of attribute values corresponding to all coding points in the point cloud group as the target attribute value corresponding to the point cloud group.

Optionally, the third determining module is specifically configured to:

calculate, for each first point cloud group, a difference between a target attribute value corresponding to the first point cloud group and a target attribute value corresponding to a second point cloud group;

determine the point cloud group as the target point cloud group in a case what the difference is less than a second preset threshold; and

determine the target value based on a first value.

Optionally, the third determining module is further specifically configured to:
determine a quotient of the first value and second value as the target value.

Optionally, the point cloud attribute coding apparatus 500 further includes:

a fifth determining module, configured to determine a third value based on the geometric information of the to-be-coded point cloud;
a sixth determining module, configured to determine a density value corresponding to the to-be-coded point cloud based on the third value and the quantity of coding points; and
a seventh determining module, configured to determine the density corresponding to the to-be-coded point cloud based on the density value.

In embodiments of this application, the to-be-coded point cloud is obtained. The target ordering manner of the to-be-coded point cloud is determined based on the initial order corresponding to the to-be-coded point cloud or based on the initial order and density corresponding to the to-be-coded point cloud. The to-be-coded point cloud is coded according to the target ordering manner. In embodiments of this application, the initial order corresponding to the to-be-coded point cloud and the density of the to-be-coded point cloud both can reflect spatial correlations of coding points in the point cloud. The target ordering manner for re-ordering the point cloud is determined based on the initial order of the to-be-coded point cloud or the initial order and density of the to-be-coded point cloud. In this way, in a process of re-ordering the point cloud, due consideration is given to the spatial correlations of the coding points in the point cloud. This improves point cloud coding efficiency.

The point cloud attribute coding apparatus provided in this embodiment of this application can implement various processes implemented in the method embodiment in FIG. 3, and the same technical effects can be achieved. This is not described herein again to avoid repetition.

The point cloud attribute decoding method provided in the embodiment of this application may be performed by a point cloud attribute decoding apparatus. In this embodiment of this application, an example in which the point cloud attribute decoding apparatus executes the point cloud attribute decoding method is used to describe the point cloud attribute decoding apparatus provided in this embodiment of this application.

As shown in FIG. 6, a point cloud attribute decoding apparatus 600 includes:

a second obtaining module 601, configured to obtain a to-be-decoded point cloud and at least one target parameter in an attribute parameter set of the to-be-decoded point cloud; and
a decoding module 602, configured to decode the to-be-decoded point cloud according to a target ordering manner represented by the target parameter.

In this embodiment of this application, the to-be-decoded point cloud and the at least one target parameter in the attribute parameter set of the to-be-decoded point cloud are obtained; and the to-be-decoded point cloud is decoded according to the target ordering manner represented by the target parameter. In this embodiment of this application, the ordering manner for re-ordering the to-be-decoded point cloud is determined based on the target parameter in the attribute parameter set of the to-be-decoded point cloud. The ordering manner represented by the target parameter is determined based on the initial order of the point cloud or based on the initial order and density. The initial order and density of the point cloud both can reflect spatial correlations of to-be-decoded points in the point cloud. This improves decoding performance.

The point cloud attribute coding apparatus and the point cloud attribute decoding apparatus in embodiments of this application may be an electronic device, an electronic device having an operating system, or a component in an electronic device, for example, an integrated circuit or a chip. The electronic device may be a terminal or another device other than a terminal. For example, the terminal may include but is not limited to the foregoing listed types of the terminal 11, and the another device may be a server, network attached storage (Network Attached Storage, NAS), and the like. This is not specifically limited in embodiments of this application.

The point cloud attribute coding apparatus provided in this embodiment of this application can implement various processes implemented in the method embodiment in FIG. 3, and the same technical effects can be achieved. This is not described herein again to avoid repetition.

The point cloud attribute decoding apparatus provided in this embodiment of this application can implement various processes implemented in the method embodiment in FIG. 4, and the same technical effects can be achieved. This is not described herein again to avoid repetition.

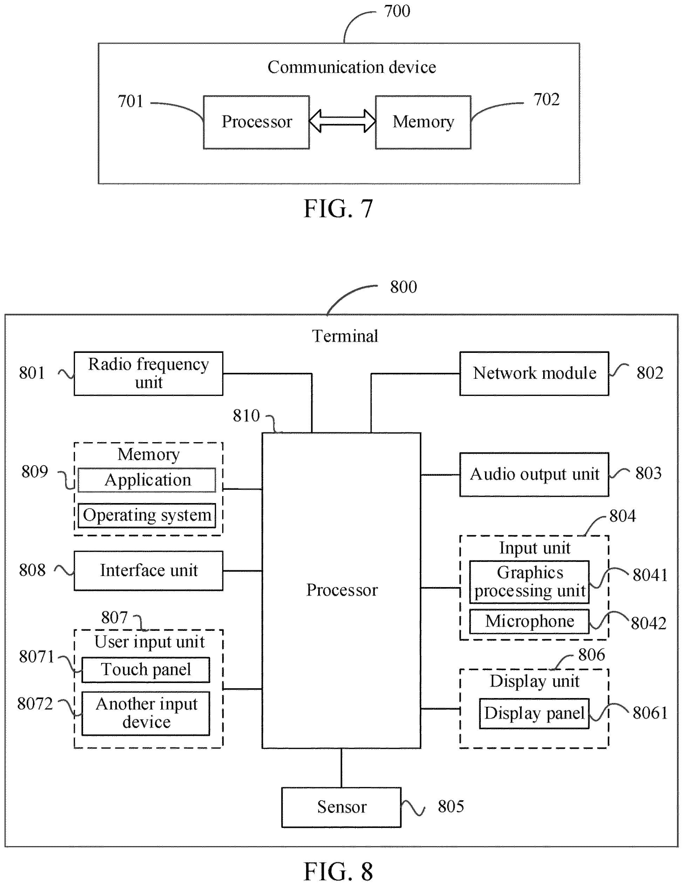

Optionally, as shown in FIG. 7, an embodiment of this application further provides a communication device 700, including a processor 701 and a memory 702. The memory 702 stores a program or an instruction that can be run on the processor 701. For example, when the communication device 700 is a terminal and the program or instruction is executed by the processor 701, the various steps in the embodiment of the point cloud attribute coding method are implemented and the same technical effects can be achieved, or the various steps in the embodiment of the point cloud attribute decoding method are implemented and the same technical effects can be achieved

An embodiment of this application provides a terminal, including a processor and a communication interface. The processor is configured to perform the following operations:

obtaining a to-be-coded point cloud;
determining a target ordering manner of the to-be-coded point cloud based on an initial order corresponding to the to-be-coded point cloud or based on the initial order and density corresponding to the to-be-coded point cloud; and
coding the to-be-coded point cloud according to the target ordering manner.

Alternatively, the processor is configured to perform the following operations:

obtaining a to-be-decoded point cloud and at least one target parameter in an attribute parameter set of the to-be-decoded point cloud; and
decoding the to-be-decoded point cloud according to a target ordering manner represented by the target parameter.

The embodiment of the terminal corresponds to the method embodiment on the terminal side. Each implementation process and implementation of the method embodiment can be applied to the embodiment of the terminal, and the same technical effects can be achieved. Specifically, FIG. 8 is a schematic diagram of a hardware structure of a terminal implementing an embodiment of this application.

A terminal 800 includes but is not limited to components such as a radio frequency unit 801, a network module 802, an audio output unit 803, an input unit 804, a sensor 805, a display unit 806, a user input unit 807, an interface unit 808, a memory 809, and a processor 810.

A person skilled in the art may understand that the terminal 800 may further include a power supply (for example, a battery) for supplying power to the components. The power supply may be logically connected to the processor 810 through a power management system, thereby implementing functions such as charging, discharging, and power consumption management by using the power management system. The terminal structure shown in FIG. 8 does not constitute a limitation on the terminal, and the terminal may include more or fewer components than those shown in the figure, or some components are combined, or a different component arrangement is used.

It should be understood that, in this embodiment of this application, the input unit 804 may include a graphics processing unit (Graphics Processing Unit, GPU) 8041 and a microphone 8042. The graphics processing unit 8041 performs processing on image data of a static picture or a video that is obtained by an image obtaining apparatus (for example, a camera) in a video obtaining mode or an image obtaining mode. A display unit 806 may include a display panel 8061. The display panel 8061 may be configured in a form of a liquid crystal display, an organic light-emitting diode, or the like. A user input unit 807 includes at least one of a touch panel 8071 and another input device 8072. The touch panel 8071 is also referred to as a touchscreen. The touch panel 8071 may include two parts: a touch detection apparatus and a touch controller. The another input device 8072 may include, but not limited to, a physical keyboard, a functional key (for example, a volume control key or a switch key), a track ball, a mouse, and a joystick, which are not described herein in detail.

In this embodiment of this application, the radio frequency unit 801 receives downlink data from a network side device and can transmit the data to the processor 810 for processing. The radio frequency unit x01 can send uplink data to the network side device. Usually, the radio frequency unit 801 includes, but is not limited to, an antenna, an amplifier, a transceiver, a coupler, a low noise amplifier, a duplexer, and the like.

The memory 809 is configured to store a software program or an instruction and various data. The memory 809 may mainly include a first storage area storing the program or the instruction and a second storage area storing data. The first storage area may store an operating system, an application or instruction required by at least one function (for example, a sound playing function or an image display function), and the like. In addition, the memory 809 may include a volatile memory or a non-volatile memory, or the memory x09 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically programmable read-only memory (electrically EPROM, EEPROM), or a flash memory. The non-volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synch link DRAM, SLDRAM), and a direct rambus random access memory (Direct Rambus RAM, DR RAM). The memory 809 in this embodiment of this application includes, but is not limited to, these memories and a memory of any other suitable type.

The processor 810 may include one or more processing units. Optionally, the processor 810 integrates an application processor and a modem processor. The application processor mainly processes operations related to an operating system, a user interface, an application, and the like. The modem processor mainly processes a wireless communication signal, for example, a baseband processor. It can be understood that, the modem processor may not be integrated into the processor 810.

The processor is configured to perform the following operations:

obtaining a to-be-coded point cloud;
determining a target ordering manner of the to-be-coded point cloud based on an initial order corresponding to the to-be-coded point cloud or based on the initial order and density corresponding to the to-be-coded point cloud; and
coding the to-be-coded point cloud according to the target ordering manner.

In embodiments of this application, the to-be-coded point cloud is obtained. The target ordering manner of the to-be-coded point cloud is determined based on the initial order corresponding to the to-be-coded point cloud or based on the initial order and density corresponding to the to-be-coded point cloud. The to-be-coded point cloud is coded according to the target ordering manner. In embodiments of this application, the initial order corresponding to the to-be-coded point cloud and the density of the to-be-coded point cloud both can reflect spatial correlations of coding points in the point cloud. The target ordering manner for re-ordering the point cloud is determined based on the initial order of the to-be-coded point cloud or the initial order and density of the to-be-coded point cloud. In this way, in a process of re-ordering the point cloud, due consideration is given to the spatial correlations of the coding points in the point cloud. This improves point cloud coding efficiency.

Alternatively, the processor 810 is configured to perform the following operations:

obtaining a to-be-decoded point cloud and at least one target parameter in an attribute parameter set of the to-be-decoded point cloud; and
decoding the to-be-decoded point cloud according to a target ordering manner represented by the target parameter.

In this embodiment of this application, the to-be-decoded point cloud and the at least one target parameter in the attribute parameter set of the to-be-decoded point cloud are obtained; and the to-be-decoded point cloud is decoded according to the target ordering manner represented by the target parameter. In this embodiment of this application, the ordering manner for re-ordering the to-be-decoded point cloud is determined based on the target parameter in the attribute parameter set of the to-be-decoded point cloud. The ordering manner represented by the target parameter is determined based on the initial order of the point cloud or based on the initial order and density. The initial order and density of the point cloud both can reflect spatial correlations of to-be-decoded points in the point cloud. This improves decoding performance.

An embodiment of this application further provides a readable storage medium. The readable storage medium stores a program or an instruction. When the program or the instruction is executed by a processor, the processes in the foregoing embodiments of the point cloud attribute coding method or the processes in the foregoing embodiment of the point cloud attribute decoding method are implemented, and the same technical effects can be achieved. This is not described herein again to avoid repetition.

The processor is the processor in the terminal in the foregoing embodiments. The readable storage medium includes a computer-readable storage medium, for example, a computer read only memory ROM, a random access memory RAM, a magnetic disk, an optical disk, and the like.

An embodiment of this application further provides a chip. The chip includes a processor and a communication interface. The communication interface and the processor are coupled. The processor is configured to run a program or an instruction, so that the processes in the foregoing embodiments of the point cloud attribute coding method or the processes in the foregoing embodiment of the point cloud attribute decoding method are implemented, and the same technical effects can be achieved. This is not described herein again to avoid repetition.

It should be understood that the chip mentioned in this embodiment of this application may also be referred to as system on chip, system-on-chip, System on Chip, SoC, or the like.

An embodiment of this application further provides a computer program product. The computer program product is stored in a storage medium. The computer program product is executed by at least one processor, so that the processes in the foregoing embodiments of the point cloud attribute coding method or the processes in the foregoing embodiment of the point cloud attribute decoding method are implemented, and the same technical effects can be achieved. This is not described herein again to avoid repetition.

It should be noted that in this specification, the terms "include", "comprise", and any variation thereof are intended to cover a non-exclusive inclusion. Therefore, a process, a method, an object, or an apparatus that includes a series of elements not only includes such elements, but also includes other elements not specified expressly, or may include inherent elements of the process, the method, the object, or the apparatus. Without more limitations, an element defined by the sentence "including one" does not exclude a case in which there are still other same elements in the process, method, object, or apparatus. Further, it should be noted that the scope of the methods and apparatuses in embodiments of this application is not limited to the shown or discussed orders in which the functions are implemented. Alternatively, depending on the functions, the functions may be performed in a substantially simultaneous manner or in a reverse order. For example, the described methods may be performed in an order different from the described order, and various steps may be added, omitted, or combined. In addition, features described with reference to some examples may be combined in other examples.

According to the descriptions in the foregoing implementations, a person skilled in the art may clearly learn that the method according to the foregoing embodiments may be implemented by relying on software and a necessary common hardware platform or by using hardware. However, in most cases, the former is preferred. Based on such an understanding, the technical solutions of this application essentially, or the part contributing to the conventional technology, may be presented in a form of a computer software product. The computer software product is stored in a storage medium (for example, a ROM/RAM, a magnetic disk, or an optical disc), including several instructions to enable a terminal (which may be a mobile phone, a computer, a server, an air conditioner, a network device, or the like) to perform the methods described in embodiments of this application.

Embodiments of this application are described above with reference to the accompanying drawings. This application is not limited to the embodiments described above, and the embodiments described above are merely examples but not limitations. A person of ordinary skill in the art may make various variations under the teaching of this application without departing from the purpose of this application and the protection scope of the claims, and such variations shall all fall within the protection scope of this application.

**Claims**

1.  A point cloud attribute coding method, wherein the method comprises:

    obtaining, by an encoder side, a to-be-coded point cloud, wherein the to-be-coded point cloud comprises at least one type of attribute information, and each coding point in the to-be-coded point cloud comprises an attribute value corresponding to the attribute information;
    determining, by the encoder side, a target ordering manner of the to-be-coded point cloud based on an initial order corresponding to the to-be-coded point cloud or based on the initial order and density corresponding to the to-be-coded point cloud, wherein the initial order is determined based on an attribute value of a target coding point in the to-be-coded point cloud, and the density is determined based on geometric information of the to-be-coded point cloud and a quantity of coding points in the to-be-coded point cloud; and
    coding, by the encoder side, the to-be-coded point cloud according to the target ordering manner.

2.  The method according to claim 1, wherein the determining a target ordering manner of the to-be-coded point cloud based on an initial order corresponding to the to-be-coded point cloud or based on the initial order and density corresponding to the to-be-coded point cloud comprises:

    determining, by the encoder side, the target ordering manner as the initial order in a case that the initial order corresponding to the to-be-coded point cloud is a first order;
    determining, by the encoder side, the target ordering manner as Hilbert code ordering in a case that the initial order corresponding to the to-be-coded point cloud is a second order and the to-be-coded point cloud is a dense point cloud; or
    determining, by the encoder side, the target ordering manner as Morton code ordering in a case that the initial order corresponding to the to-be-coded point cloud is a second order and the to-be-coded point cloud is a sparse point cloud, wherein
    the first order represents a first correlation of spatial coding points of the to-be-coded point cloud, and the second order represents a second correlation of the spatial coding points of the to-be-coded point cloud.

3.  The method according to claim 1, wherein the method further comprises:

    dividing, by the encoder side, the to-be-coded point cloud, to obtain N point cloud groups, wherein N is a positive integer greater than or equal to 1;
    determining, by the encoder side, a target attribute value corresponding to each point cloud group based on an attribute value corresponding to a target coding point in the point cloud group;

determining, by the encoder side, a target value based on N and the target attribute value corresponding to each point cloud group; and

determining, by the encoder side, the initial order based on the target value.

4. The method according to claim 3, wherein the initial order meets at least one of the following:

in a case that the target value is greater than a first preset threshold, the initial order corresponding to the to-be-coded point cloud is the first order; or

in a case that the target value is less than or equal to the first preset threshold, the initial order corresponding to the to-be-coded point cloud is the second order, wherein

the first order represents a first correlation of spatial coding points of the to-be-coded point cloud, and the second order represents a second correlation of the spatial coding points of the to-be-coded point cloud.

5. The method according to claim 3, wherein the determining a target attribute value corresponding to each point cloud group based on an attribute value corresponding to a target coding point in the point cloud group comprises:

determining, by the encoder side, an attribute value corresponding to a first coding point in the point cloud group as the target attribute value corresponding to the point cloud group; or

determining, by the encoder side, an average of attribute values corresponding to all coding points in the point cloud group as the target attribute value corresponding to the point cloud group.

6. The method according to claim 3, wherein the determining a target value based on N and the target attribute value corresponding to each point cloud group comprises:

calculating, by the encoder side for each first point cloud group, a difference between a target attribute value corresponding to the first point cloud group and a target attribute value corresponding to a second point cloud group, wherein the first point cloud group is any point cloud group other than a head point cloud group in the to-be-coded point cloud groups, and the second point cloud group is associated with the first point cloud group; determining, by the encoder side, the first point cloud group as a target point cloud group in a case what the difference is less than a second preset threshold; and

determining, by the encoder side, the target value based on a first value, wherein the first value represents a quantity of target point cloud groups in the to-be-coded point cloud.

7. The method according to claim 6, wherein the determining the target value based on a first value comprises: determining a quotient of the first value and a second value as the target value, wherein the second value is determined based on N.

8. The method according to claim 1, wherein the method further comprises:

determining, by the encoder side, a third value based on the geometric information of the to-be-coded point cloud, wherein the third value represents a size of the to-be-coded point cloud;

determining, by the encoder side, a density value corresponding to the to-be-coded point cloud based on the third value and the quantity of coding points; and

determining, by the encoder side, the density corresponding to the to-be-coded point cloud based on the density value, wherein the to-be-coded point cloud is determined as a dense point cloud in a case that the density value is less than a third preset threshold; or the to-be-coded point cloud is determined as a sparse point cloud in a case that the density value is greater than or equal to the third preset threshold.

9. A point cloud attribute coding apparatus, comprising:

a first obtaining module, configured to obtain a to-be-coded point cloud, wherein the to-be-coded point cloud comprises at least one type of attribute information, and each coding point in the to-be-coded point cloud comprises an attribute value corresponding to the attribute information;

a first determining module, configured to determine a target ordering manner of the to-be-coded point cloud based on an initial order corresponding to the to-be-coded point cloud or based on the initial order and density corresponding to the to-be-coded point cloud, wherein the initial order is determined based on an attribute value of a target coding point in the to-be-coded point cloud, and the density is determined based on geometric information of the to-be-coded point cloud and a quantity of coding points in the to-be-coded point cloud; and

a coding module, configured to code the to-be-coded point cloud according to the target ordering manner.

10. The point cloud attribute coding apparatus according to claim 9, wherein the first determining module is specifically configured to:

determine the target ordering manner as the initial order in a case that the initial order corresponding to the to-be-coded point cloud is a first order;
determine the target ordering manner as Hilbert code ordering in a case that the initial order corresponding to the to-be-coded point cloud is a second order and the to-be-coded point cloud is a dense point cloud; or
determine the target ordering manner as Morton code ordering in a case that the initial order corresponding to the to-be-coded point cloud is a second order and the to-be-coded point cloud is a sparse point cloud, wherein the first order represents a first correlation of spatial coding points of the to-be-coded point cloud, and the second order represents a second correlation of the spatial coding points of the to-be-coded point cloud.

11. The point cloud attribute coding apparatus according to claim 9, wherein the point cloud attribute coding apparatus further comprises:

a dividing module, configured to divide the to-be-coded point cloud, to obtain N point cloud groups, wherein N is a positive integer greater than or equal to 1;
a second determining module, configured to determine a target attribute value corresponding to each point cloud group based on an attribute value corresponding to a target coding point in the point cloud group;
a third determining module, configured to determine a target value based on N and the target attribute value corresponding to each point cloud group; and
a fourth determining module, configured to determine the initial order based on the target value.

12. The point cloud attribute coding apparatus according to claim 11, wherein the second determining module is specifically configured to:

determine an attribute value corresponding to a first coding point in the point cloud group as the target attribute value corresponding to the point cloud group; or
determine an average of attribute values corresponding to all coding points in the point cloud group as the target attribute value corresponding to the point cloud group.

13. The point cloud attribute coding apparatus according to claim 11, wherein the third determining module is specifically configured to:

calculate, for each first point cloud group, a difference between a target attribute value corresponding to the first point cloud group and a target attribute value corresponding to a second point cloud group, wherein the first point cloud group is any point cloud group other than a head point cloud group in the to-be-coded point cloud groups, and the second point cloud group is associated with the first point cloud group;
determine the point cloud group as the target point cloud group in a case what the difference is less than a second preset threshold; and
determine the target value based on a first value, wherein the first value represents a quantity of target point cloud groups in the to-be-coded point cloud.

14. The point cloud attribute coding apparatus according to claim 13, wherein the third determining module is further specifically configured to:
determine a quotient of the first value and a second value as the target value, wherein the second value is determined based on N.

15. The point cloud attribute coding apparatus according to claim 9, wherein the point cloud attribute coding apparatus further comprises:

a fifth determining module, configured to determine a third value based on the geometric information of the to-be-coded point cloud, wherein the third value represents a size of the to-be-coded point cloud;
a sixth determining module, configured to determine a density value corresponding to the to-be-coded point cloud based on the third value and the quantity of coding points; and
a seventh determining module, configured to determine the density corresponding to the to-be-coded point cloud based on the density value, wherein the to-be-coded point cloud is determined as a dense point cloud in a case that the density value is less than a third preset threshold; or the to-be-coded point cloud is determined as a sparse point cloud in a case that the density value is greater than or equal to the third preset threshold.

16. A point cloud attribute decoding method, wherein the method comprises:

   obtaining, by a decoder side, a to-be-decoded point cloud and at least one target parameter in an attribute parameter set of the to-be-decoded point cloud, wherein one target parameter represents a target ordering manner corresponding to a type of attribute information; and
   decoding, by the decoder side, the to-be-decoded point cloud according to a target ordering manner represented by the target parameter.

17. The method according to claim 16, wherein in a case that the target parameter is a first value, the target ordering manner is an initial order; or

   in a case that the target parameter is a second value, the target ordering manner is Hilbert code ordering; or
   in a case that the target parameter is a third value, the target ordering manner is Morton code ordering.

18. A point cloud attribute decoding apparatus, comprising:

   a second obtaining module, configured to obtain a to-be-decoded point cloud and at least one target parameter in an attribute parameter set of the to-be-decoded point cloud, wherein one target parameter represents a target ordering manner corresponding to a type of attribute information; and
   a decoding module, configured to decode the to-be-decoded point cloud according to a target ordering manner represented by the target parameter.

19. A terminal, comprising a processor and a memory, wherein the memory stores a program or an instruction that can be run on the processor, and when the program or the instruction is executed by the processor, the steps of the point cloud attribute coding method according to any one of claims 1 to 8 are implemented or the steps of the point cloud attribute decoding method according to claim 16 or 17 are implemented.

20. A readable storage medium, wherein the readable storage medium stores a program or an instruction, and when the program or the instruction is executed by a processor, the steps of the point cloud attribute coding method according to any one of claims 1 to 8 are implemented or the steps of the point cloud attribute decoding method according to claim 16 or 17 are implemented.

21. A chip, wherein the chip comprises a processor and a communication interface, the communication interface is coupled to the processor, and the processor is configured to run a program or an instruction, to implement the steps of the point cloud attribute coding method according to any one of claims 1 to 8 or the steps of the point cloud attribute decoding method according to claim 16 or 17.

22. A computer program product, wherein the computer program product is stored in a storage medium, and the computer program product is executed by at least one processor to implement the steps of the point cloud attribute coding method according to any one of claims 1 to 8 or the steps of the point cloud attribute decoding method according to claim 16 or 17.

23. An electronic device, configured to implement the steps of the point cloud attribute coding method according to any one of claims 1 to 8 or the steps of the point cloud attribute decoding method according to claim 16 or 17.

Geometric information                              Attribute information

Coordinate translation                          Space conversion
Coordinate quantization

                                                Attribute difference

Octree construction

                        Octree
                        reconstruction

                                        Attribute          Attribute
                                        prediction         transformation

Entropy coding

                                                Quantization

                                                Entropy coding

Geometric stream                                Attribute stream

FIG. 1

Geometric stream

Attribute stream

Entropy decoding

Entropy decoding

Octree reconstruction

Reverse quantization

Reverse coordinate
quantization
Reverse coordinate
translation

Attribute
prediction
compensation

Reverse
attribute
transformation

Reverse space
conversion

Geometric information

Attribute information

FIG. 2

An encoder side obtains a to-be-coded point cloud — S101

The encoder side determines a target ordering manner of the to-be-coded point cloud based on an initial order corresponding to the to-be-coded point cloud or based on the initial order and density corresponding to the to-be-coded point cloud — S102

The encoder side codes the to-be-coded point cloud according to the target ordering manner — S103

FIG. 3

A decoder side obtains a to-be-decoded point cloud and at least one target parameter in an attribute parameter set of the to-be-decoded point cloud — S201

The decoder side decodes the to-be-decoded point cloud according to a target ordering manner represented by the target parameter — S202

FIG. 4

500

Point cloud attribute
coding apparatus

501

First obtaining module

502

First determining
module

503

Coding module

FIG. 5

600

Point cloud attribute
decoding apparatus

601

Second obtaining
module

602

Decoding module

FIG. 6

700

Communication device

701 — Processor ⟺ Memory — 702

FIG. 7

800

Terminal

801 — Radio frequency unit

Network module — 802

810 —

809 — Memory
Application
Operating system

Audio output unit — 803

808 — Interface unit

Processor

804
Input unit
Graphics processing unit — 8041
Microphone — 8042

807 —
User input unit
8071 — Touch panel
8072 — Another input device

806
Display unit
Display panel — 8061

Sensor — 805

FIG. 8

## INTERNATIONAL SEARCH REPORT

| International application No. |
| --- |
| **PCT/CN2022/135871** |

**A.    CLASSIFICATION OF SUBJECT MATTER**

H04N13/161(2018.01)i

According to International Patent Classification (IPC) or to both national classification and IPC

**B.    FIELDS SEARCHED**

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

CNABS; CNTXT; EPTXT; USTXT; WOTXT; VEN; CNKI: 点云, 编码, 解码, 压缩, 排序, 莫顿, 希尔伯特, 属性, point cloud, code, encode, decode, compress, sort, order, morton, hilbert, attribute

**C.    DOCUMENTS CONSIDERED TO BE RELEVANT**

| Category* | Citation of document, with indication, where appropriate, of the relevant passages | Relevant to claim No. |
| --- | --- | --- |
| X | CN 111953998 A (XIDIAN UNIVERSITY) 17 November 2020 (2020-11-17) description, paragraphs [0052]-[0127] | 16-23 |
| X | CN 112218079 A (PEKING UNIVERSITY SHENZHEN GRADUATE SCHOOL) 12 January 2021 (2021-01-12) description, paragraphs [0065]-[0110] | 16-23 |
| A | CN 113096198 A (SUN YAT-SEN UNIVERSITY) 09 July 2021 (2021-07-09) entire document | 1-23 |
| A | US 2021366159 A1 (PANASONIC INTELLECTUAL PROPERTY CORPORATION OF AMERICA) 25 November 2021 (2021-11-25) entire document | 1-23 |
| A | US 2021166372 A1 (MY VIRTUAL REALITY SOFTWARE AS) 03 June 2021 (2021-06-03) entire document | 1-23 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **30 January 2023** | **24 February 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

| International application No. |
| --- |
| **PCT/CN2022/135871** |

| Patent document cited in search report | | | Publication date (day/month/year) | Patent family member(s) | Publication date (day/month/year) |
| --- | --- | --- | --- | --- | --- |
| CN | 111953998 | A | 17 November 2020 | None | |
| CN | 112218079 | A | 12 January 2021 | None | |
| CN | 113096198 | A | 09 July 2021 | None | |
| US | 2021366159 | A1 | 25 November 2021 | None | |
| US | 2021166372 | A1 | 03 June 2021 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111465446